# EUROPEAN PATENT APPLICATION

(11) **EP 2 985 741 A1**
(43) Date of publication of application: **17.02.2016**
(21) Application number: 15180170.1
(22) Date of filing: 07.08.2015
(51) Int. Cl.: G07G 1/00, G06T 7/40, G06K 9/62

(54) **INFORMATION PROCESSING APPARATUS AND INFORMATION PROCESSING METHOD**

(30) Priority: 08.08.2014 JP 2014162934
(71) Applicant: Toshiba TEC Kabushiki Kaisha, Tokyo 141-0032 (JP)
(72) Inventor: OKAMURA, Atsushi, Shinagawa-ku, Tokyo 141-0032 (JP); HATANAKA, Yuichiro, Shinagawa-ku, Tokyo 141-0032 (JP); YOKOYAMA, Yukiko, Shinagawa-ku, Tokyo 141-0032 (JP)
(74) Representative: Takeuchi, Maya

(57) **Abstract**

According to one embodiment, an information processing apparatus includes an acquisition module configured to acquire, from a feature pickup module including at least one image capturing module, information indicating an exterior of an article picked up by the feature pickup module, an extracting module configured to extract, from the information picked up by the acquisition module, a plurality of feature amounts indicating external features of the article, a recognizing module configured to compare each of the feature amounts extracted by the extracting module with feature amounts for collation of commodities registered in a dictionary in advance to recognize commodity candidates serving as candidates of the article out of the commodities according to similarity degrees of the feature amounts, and a display module configured to display information concerning the commodity candidates recognized by the recognizing module.

## Description

### FIELD

Embodiments described herein relate generally to an information processing apparatus and an information processing method.

### BACKGROUND

There has been a technique for comparing a feature amount of an article extracted from a captured image of the article with a feature amount for collation registered in a dictionary in advance to recognize a category of the article according to similarity of the feature amounts. There has also been proposed a store system that applies the technique for article recognition to an identification of commodities such as fruits and vegetables to register sales of the identified commodities.

Incidentally, in the conventionally related art described above, in general, one feature amount is extracted from an image captured by one image capturing unit. However, in the related art, external features of a commodity can be grasped only unilaterally. Therefore, it may be difficult to recognize the commodity, because, for example, depending on a category and a classification of a commodity, features of the commodity cannot be grasped. In such a case, it is necessary to perform the image capturing again while changing an image-capturing angle (an image capturing direction) of the commodity. It becomes a main factor which reduces an efficiency of processing. Therefore, in the related art, there is room of improvement in terms of an increase in a recognition rate of a commodity.

### DESCRIPTION OF THE DRAWINGS

FIG. 1 is a perspective view showing an example of a checkout system according to a first embodiment;
FIG. 2 is a block diagram showing hardware configurations of a POS terminal and a commodity reading apparatus according to the first embodiment;
FIG. 3 is a conceptual diagram illustrating the data configuration of a PLU file shown in FIG. 2;
FIG. 4 is a block diagram showing the functional configuration of the POS terminal according to the first embodiment;
FIG. 5 is a diagram showing a display example of a commodity candidate screen;
FIG. 6 is a flowchart illustrating an example of sales registration processing executed by the POS terminal according to the first embodiment;
FIG. 7 is a block diagram showing the functional configuration of a POS terminal according to a modification of the first embodiment;
FIG. 8 is a flowchart illustrating an example of sales registration processing executed by the POS terminal according to the modification of the first embodiment;
FIG. 9 is a block diagram showing hardware configurations of a POS terminal and a commodity reading apparatus according to a second embodiment;
FIG. 10 is a block diagram showing the functional configuration of the POS terminal according to the second embodiment;
FIG. 11 is a flowchart illustrating an example of sales registration processing executed by the POS terminal according to the second embodiment;
FIG. 12 is a block diagram showing the functional configuration of a POS terminal according to a modification of the second embodiment;
FIG. 13 is a flowchart illustrating an example of sales registration processing executed by the POS terminal according to the modification of the second embodiment;
FIG. 14 is an external perspective view showing the configuration of a self-POS; and
FIG. 15 is a block diagram showing the hardware configuration of the self-POS.

### DETAILED DESCRIPTION

In general, according to one embodiment, an information processing apparatus includes an acquisition module, an extracting module, a recognizing module, and a display module. The acquisition module acquires, from a feature pickup module including at least one image capturing module, information indicating an exterior of an article picked up by the feature pickup module. The extracting module extracts, from the information acquired by the acquisition module, a plurality of feature amounts indicating external features of the article. The recognizing module compares each of the feature amounts extracted by the extracting module with feature amounts for collation of commodities registered in a dictionary in advance to recognize commodity candidates serving as candidates of the article out of the commodities according to similarity degrees of the feature amounts. The display module displays information concerning the commodity candidates recognized by the recognizing module.

Preferably, the feature pickup module includes a plurality of the image capturing modules having characteristics different from one another.

Preferably, the acquisition module acquires a captured image of the article from each of the image capturing modules.

Preferably, the feature pickup module includes the image capturing module and a distance measuring module configured to measure a three-dimensional distance to the article present in an image capturing region of the image capturing module.

Preferably, the acquisition module acquires a captured image of the article from the image capturing module and acquires the three-dimensional distance measured by the distance measuring module.

Preferably, the apparatus, further comprises an integrating module configured to integrate, on the basis of the similarity degrees, the commodity candidates for the feature amounts recognized by the recognizing module. The display module displays information concerning the commodity candidates integrated by the integrating module.

Preferably, the dictionary stores, concerning each of the commodities, as a co-occurrence feature amount, a co-occurrence relation between feature amounts relating to a predetermined elements.

Preferably, the recognizing module compares a relation between the feature amounts extracted by the extracting module concerning the elements and the feature amounts for collation of the commodities registered in the dictionary and calculates similarity degrees between the relation and the feature amounts for collation.

The invention also relates to an information processing method. The method includes capturing an image of an article;
Acquiring picked up information indicating an exterior of the article ;
extracting, from the information acquired at the acquiring step, a plurality of feature amounts indicating external features of the article;
comparing each of the feature amounts extracted by the extracting module with feature amounts for collation of commodities registered in a dictionary in advance;
recognizing commodity candidates serving as candidates of the article out of the commodities according to similarity degrees of the feature amounts; and
displaying information concerning the commodity candidates recognized at the recognizing step.

Preferably, the capturing step comprises capturing a plurality of the image having characteristics different from one another.

Preferably, the acquiring step comprises acquiring a captured image of the article from each of the captured images.

Preferably, capturing step further comprises measuring a three-dimensional distance to the article present in an image capturing region.

Preferably, the acquiring step further comprises acquiring a captured image of the article at the capturing step and acquiring the three-dimensional distance measured by the distance at the measuring step.

Preferably, the method further comprises integrating, on the basis of the similarity degrees, the commodity candidates for the feature amounts recognized at the recognizing step.

Preferably, the method further comprises displaying information concerning the commodity candidates integrated at the integrating step.

Preferably, the dictionary stores, concerning each of the commodities, as a co-occurrence feature amount, a co-occurrence relation between feature amounts relating to a predetermined elements.

Preferably, the recognizing step comprises comparing a relation between the feature amounts extracted by the extracting step concerning the elements and the feature amounts for collation of the commodities registered in the dictionary and calculates similarity degrees between the relation and the feature amounts for collation.

The invention also relates to a computer program for causing a computer to function as the information processing apparatus.

An information processing apparatus according to an embodiment is described below using a checkout system as an example with reference to the accompanying drawings. A store system is a checkout system (a POS system) including a POS terminal that performs registration and settlement of commodities relating to one transaction. This embodiment is an application example to a checkout system introduced in a store such as a supermarket.

### (First Embodiment)

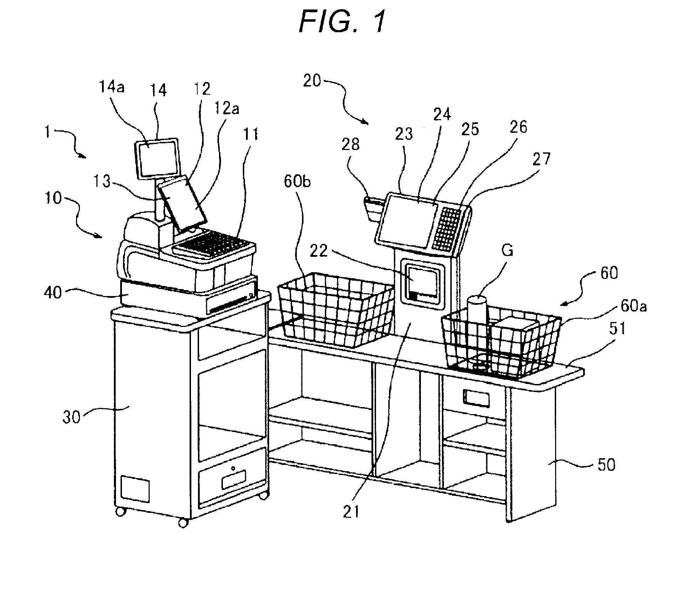

FIG. 1 is a perspective view showing an example of a checkout system 1. As shown in FIG. 1, the checkout system 1 includes a POS (Point Of sales terminal) terminal 10 that performs registration and settlement of commodities relating to one transaction and a commodity reading apparatus 20 that reads information concerning the commodities. In the following description, an example is explained in which the POS terminal 10 and the commodity reading apparatus 20 are applied as the information processing apparatus according to the present embodiment.

The POS terminal 10 is placed on the upper surface of a drawer 40 on a checkout table 30. An opening operation of the drawer 40 is controlled by the POS terminal 10. A keyboard 11 pressed by an operator (a store clerk) is arranged on the upper surface of the POS terminal 10. Further at the back side of the keyboard 11 when viewed from the operator who operates the keyboard 11, a first display device 12 for displaying information to the operator is provided. The first display device 12 displays information on a display surface 12a thereof. A touch panel 13 is laminated on the display surface 12a. Further at the backside of the first display device 12, a second display device 14 is vertically provided to be capable of rotating. The second display device 14 displays information on a display surface 14a thereof. Note that the second display device 14 displays information to a customer by rotating the display surface 14a to face the customer (not shown) in FIG. 1.

A counter table 50 having a laterally-long table shape is disposed to form an L-shape in conjunction with the checkout table 30 on which the POS terminal 10 is placed. A receiving surface 51 is formed on the upper surface of the counter table 50. A shopping basket 60, in which a commodity G is put, is placed on the receiving surface 51. The shopping basket 60 includes a first shopping basket 60a carried by the customer and a second shopping basket 60b placed in a position across the commodity reading apparatus 20 from the first shopping basket 60a. Note that the shopping basket 60 is not limited to a shopping basket of a so-called basket shape and may be a tray or the like. The shopping basket 60 (the second shopping basket 60b) is not limited also to a shopping basket of a so-called basket type and may be a shopping basket of a box shape, a bag shape, or the like.

The commodity reading apparatus 20 connected to the POS terminal 10 to be capable of transmitting and receiving data is arranged on the receiving surface 51 of the counter table 50. The commodity reading apparatus 20 includes a housing 21 having a thin rectangular shape. A reading window 22 is formed on the front surface of the housing 21. A display and operation unit 23 is arranged to an upper part of the housing 21. In the display and operation unit 23, a first display device 25 serving as a display unit of which a touch panel 24 is laminated on the surface thereof is provided. A keyboard 26 is disposed at the right side of the first display device 25. A card reading groove 27 of a card reader (not shown) is provided at the right side of the keyboard 26. A second display device 28 for providing information to the customer is provided at the left backside of the display and operation unit 23 when viewed from the operator.

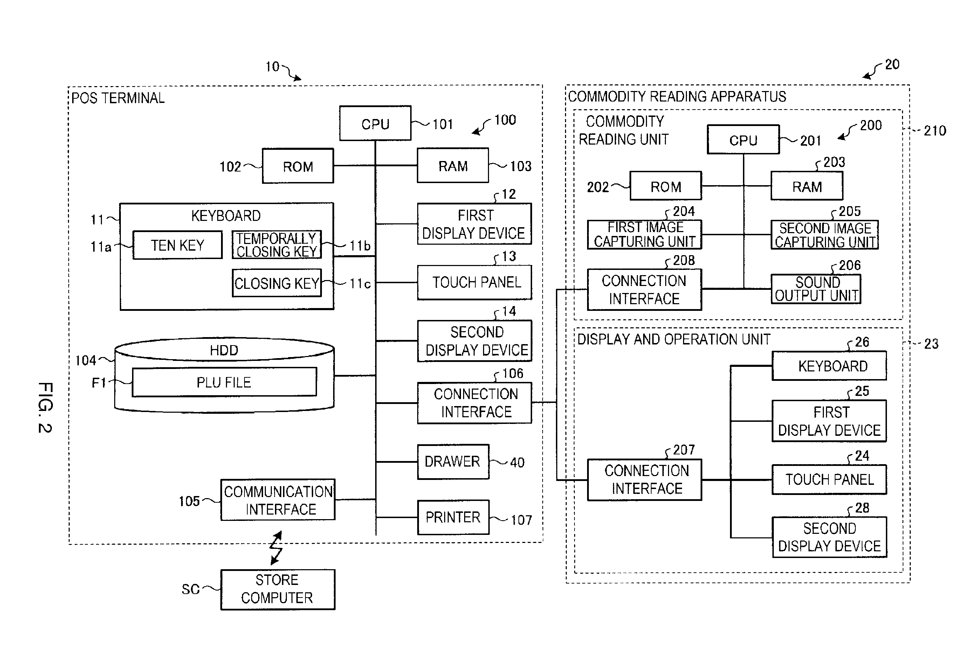

The commodity reading apparatus 20 includes a commodity reading unit 210 (see FIG. 2). In the commodity reading unit 210, a first image capturing unit 204 and a second image capturing unit 205 functioning as a feature pickup module are disposed on the backside of the reading window 22 (see FIG. 2).

The commodity G relating to one transaction is put in the first shopping basket 60a carried by the customer. The commodity G in the first shopping basket 60a is moved to the second shopping basket 60b by the operator who operates the commodity reading apparatus 20. In this moving process, the commodity G is directed to the reading window 22 of the commodity reading apparatus 20. Then, the first image capturing unit 204 and the second image capturing unit 205 (see FIG. 2) disposed in the reading window 22 respectively capture images of the commodity G.

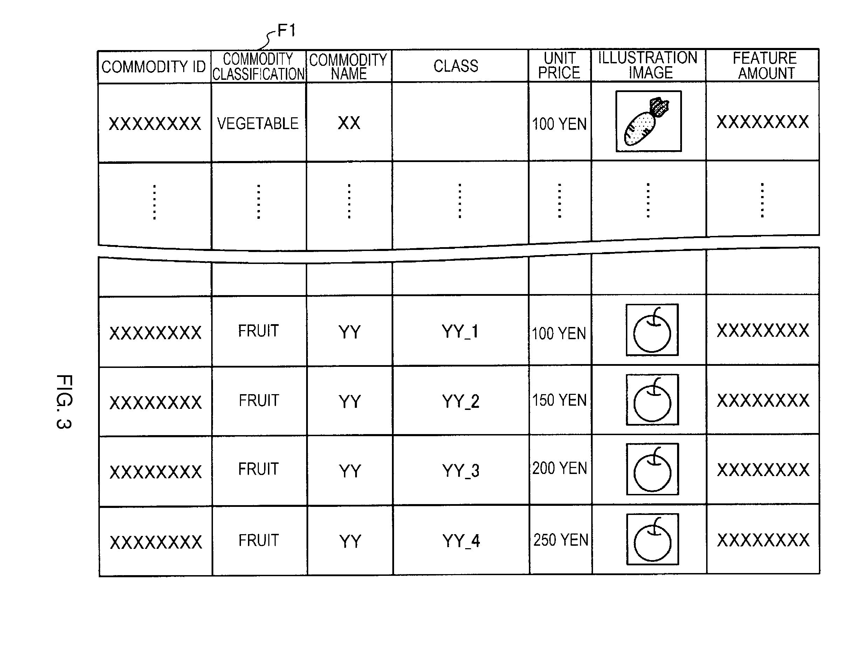

The commodity reading apparatus 20 displays, on the display and operation unit 23, a screen for designating a commodity, registered in a PLU (Price Look-Up table) file F1 (see FIG. 3), which corresponds to the commodity G contained in the images captured by the first image capturing unit 204 and the second image capturing unit 205. The commodity reading apparatus 20 notifies the POS terminal 10 of a commodity ID of the designated commodity. The POS terminal 10 records, on the basis of the commodity ID notified from the commodity reading apparatus 20, information relating to sales registration such as a commodity classification, a commodity name, and a unit price corresponding to the commodity ID in a sales master file (not shown in the figure) to perform sales registration.

FIG. 2 is a block diagram showing the hardware configurations of the POS terminal 10 and the commodity reading apparatus 20. First, the configuration of the commodity reading apparatus 20 is described.

The commodity reading apparatus 20 includes a microcomputer 200 functioning as an information processing unit that executes information processing. The microcomputer 200 is configured by connecting, via a bus line, a ROM (Read Only Memory) 202 and a RAM (Random Access Memory) 203 to a CPU (Central Processing Unit) 201 that executes various kinds of arithmetic processing to control each unit. A computer program to be executed by the CPU 201 is stored in the ROM 202.

The first image capturing unit 204, the second image capturing unit 205, and a sound output unit 206 are connected to the CPU 201 of the commodity reading apparatus 20 via various input and output circuits (all of which are not shown in the figure). The operations of the first image capturing unit 204, the second image capturing unit 205, and the sound output unit 206 are controlled by the CPU 201.

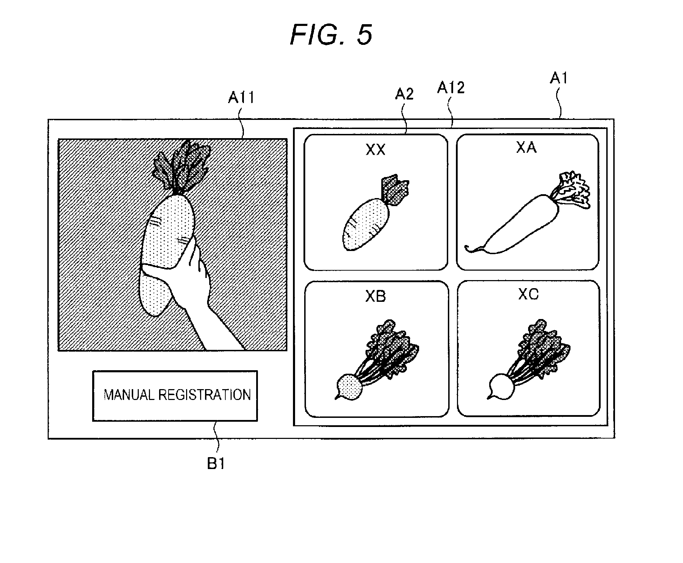

The display and operation unit 23 is connected to the commodity reading unit 210 and the POS terminal 10 via a connection interface 207. The operation of the display and operation unit 23 is controlled by the CPU 201 of the commodity reading unit 210 and the CPU 101 of the POS terminal 10. The first display device 25 displays, under the control by the CPU 101 and the CPU 201, various screens such as a commodity candidate screen (see FIG. 5) described below. The first display device 25 displays a job selection screen (not shown in the figure) for selecting and instructing various jobs. The job selection screen includes, for example, a selection menu for instructing execution of respective kinds of processing such as sales registration described later.

The first image capturing unit 204 and the second image capturing unit 205 are image pickup devices (image capturing modules). The first image capturing unit 204 and the second image capturing unit 205 perform image capturing through the reading window 22 under the control by the CPU 201. Images captured by the first image capturing unit 204 and the second image capturing unit 205 are information indicating an exterior of the commodity G viewed through the reading window 22. The first image capturing unit 204 and the second image capturing unit 205 have characteristics different from each other in image capturing methods, functions, and the like. Note that the characteristics of the image capturing units are not particularly limited. Various forms can be adopted.

For example, the first image capturing unit 204 and the second image capturing unit 205 are configured as image pickup devices having the same configuration that perform image capturing in three wavelength bands of RGB (Red-Green-Blue). The first image capturing unit 204 and the second image capturing unit 205 are disposed in the reading window 22 to set image capturing directions of the image capturing units in directions different from each other. Specifically, the first image capturing unit 204 and the second image capturing unit 205 may be configured such that one image capturing unit captures, from the front side, the commodity G located in front of the reading window 22 and the other image capturing unit captures the commodity G from any one of upper, lower, left, and right directions. The first image capturing unit 204 and the second image capturing unit 205 may be configured to capture, from the left and right directions in the reading window 22, the commodity G located in front of the reading window 22. The first image capturing unit 204 and the second image capturing unit 205 may be configured to capture, from the upper and lower directions in the reading window 22, the commodity G located in front of the reading window 22.

For example, the first image capturing unit 204 may be configured as an image pickup device that performs image capturing in the three wavelength bands of RGB and the second image capturing unit 205 may be configured as an image pickup device capable of performing image capturing in a specific wavelength band other than the three wavelength bands. If this configuration is adopted, the second image capturing unit 205 may perform image capturing in any one or all of the three wavelength bands of RGB together with the specific wavelength band. The specific wavelength band may be a visible light band or may be an invisible light band (an infrared ray, an ultraviolet ray, etc.). The specific wavelength band is not limited to one specific wavelength band and may be a plurality of specific wavelength bands. Note that, if this configuration is adopted, the image capturing directions of the first image capturing unit 204 and the second image capturing unit 205 may be the same or may be directions different from each other.

For example, the first image capturing unit 204 and the second image capturing unit 205 may be image pickup devices having different image capturing magnifications. Specifically, the first image capturing unit 204 may be configured to include a normal lens of a center projection system and the second image capturing unit 205 may be configured to include a fish-eye lens. Note that, if this configuration is adopted, the image pickup directions of the first image capturing unit 204 and the second image capturing unit 205 may be the same or may be directions different from each other.

The first image capturing unit 204 and the second image capturing unit 205 perform image capturing of a moving image, for example, at 30 fps. The captured image (a frame image) is stored in the RAM 203. Note that, in order to capture an image of the commodity G acting as a moving body without a blur, it is preferable to set a shutter time of the first image capturing unit 204 and the second image capturing unit 205 short.

The sound output unit 206 includes a sound circuit and a speaker which issue a warning sound or the like set in advance. The sound output unit 206 performs notification with the warning sound or voice under the control by the CPU 201.

Further, the commodity reading unit 210 includes a connection interface 208 connectable to a connection interface 106 of the POS terminal 10 and the connection interface 207 of the display and operation unit 23. The CPU 201 performs transmission/reception of various data to and from the POS terminal 10 via the connection interface 208. In addition, the CPU 201 executes a data transmission/reception to and from the display and operation unit 23 through the connection interface 208.

The POS terminal 10 also includes a microcomputer 100 functioning as an information processing unit that executes information processing. The microcomputer 100 is configured by connecting, via a bus line, the ROM 102 and the RAM 103 to the CPU 101 that executes various kinds of arithmetic processing to control each unit. In the ROM 102, a computer program to be executed by the CPU 101 is stored.

All of the keyboard 11, the first display device 12, the touch panel 13, the second display device 14, and the drawer 40 are connected to the CPU 101 of the POS terminal 10 via various input and output circuits (all of which are not shown in the figure) to be controlled by the CPU 101.

The keyboard 11 includes a ten key 11c of which numerals and arithmetic operators are displayed on the surfaces thereof, a temporarily closing key 11b, and a closing key 11c.

An HDD (Hard Disk Drive) 104 is connected to the CPU 101 of the POS terminal 10. Computer programs and various files are stored in the HDD 104. All or a part of the computer programs and the various files stored in the HDD 104 are copied to the RAM 103 and executed by the CPU 101 when starting the POS terminal 10. Examples of the computer programs stored in the HDD 104 are application programs for sales registration processing and dictionary registration processing described later. Examples of the files stored in the HDD 104 are the PLU file F1 and the like.

The PLU file F1 is a data file that stores information relating to sales registration of commodities sold in the store. In the following description, the PLU file F1 is used as a dictionary for collation with the commodity G. However, the dictionary may be a file different from the PLU file F1. The dictionary stores data for collation (a feature amount) of the commodity G extracted from the captured image data. If the dictionary is the file different from the PLU file F1, a feature amount stored in the dictionary and information (commodity information) of the PLU file F1 are associated with each other in the same commodity.

FIG. 3 is a conceptual diagram illustrating the data configuration of the PLU file F1. As shown in FIG. 3, the PLU file F1 stores, for each of commodities, commodity information, an illustration image, and a feature amount. The commodity information includes information concerning the commodity such as a commodity ID, which is identification information uniquely assigned to each of the commodities, a commodity category to which the commodity belongs, a commodity name, a classification, and a unit price. The illustration image is image data representing the commodity with a photograph or an illustration.

The feature amount is data obtained by parameterizing features of an exterior of a commodity such as a standard shape, a hue of the surface, a pattern, and an unevenness state of the surface. The feature amount is used as data for collation in determination of similarity degree described later. In the following description, the commodity registered in the PLU file F1 used as the dictionary is referred to as a registered commodity.

Note that, in the present embodiment a first similarity degree calculating unit 115 and a second similarity degree calculating unit 116 described below refer to a common feature amount in the same registered commodity. However, the feature amount is not limited to this. Specifically, if a difference between characteristics of the first image capturing unit 204 and the second image capturing unit 205 is meaningfully reflected on a feature amount extracted from images captured by the image capturing units, feature amounts corresponding to the characteristics may be respectively prepared.

For example, if wavelength bands that can be captured by the first image capturing unit 204 and the second image capturing unit 205 are different, feature amounts of a commodity (a registered commodity) extracted from images captured by the image capturing units are different according to functions of the image capturing units. Therefore, in such a case, the feature amounts extracted from the images concerning the same registered commodity are separately registered as a feature amount for the first image capturing unit 204 and a feature amount for the second image capturing unit 205. Consequently, the feature amounts referred to by the first similarity degree calculating unit 115 and the second similarity degree calculating unit 116 can be set different from each other.

For example, in a case in which the first image capturing unit 204 captures the commodity G located in front of the reading window 22 from the above direction to the commodity, the second image capturing unit 205 captures an image of the commodity G from the below direction to the commodity G. It is instructed to direct a calyx of a fruit upward and direct a fruit top (opposite side of the calyx) downward When the fruit is held over the reading window 22. Under such a situation, feature amounts of the fruit (a registered commodity) respectively extracted from the images captured by the first image capturing unit 204 and the second image capturing unit 205 are different according to the image capturing directions of the image capturing units. Therefore, in such a case, concerning the fruit (registered commodity), feature amounts respectively representing features of the calyx and the fruit top are separately registered as feature amounts for the first image capturing unit 204 and the second image capturing unit 205. Consequently, the feature amounts respectively referred to by the first similarity degree calculating unit 115 and the second similarity degree calculating unit 116 can be set different from each other.

Depending on a store, there is a case that the commodity G is recognized even in a classification thereof. In such a case, as shown in FIG. 3, information concerning a commodity such as a commodity name and a unit price, an illustration image indicating the commodity, and a feature amount are managed for each of classifications. For example, if a category of an article (commodity) is "YY", information concerning the commodity, an illustration image, and a feature amount are managed for each of classifications such as a "YY-1", a "YY-2", and a "YY-3". If candidates are displayed in characters without using illustration image, it is not required to store illustration images in the PLU file F1.

Referring back to FIG. 2, a communication interface 105 for executing data communication with a store computer SC is connected to the CPU 101 of the POS terminal 10 via an input and output circuit (not shown in the figure). The store computer SC is set in a back-office of the store. The PLU file F1 to be distributed to the POS terminal 10 is stored in an HDD (not shown in the figure) of the store computer SC.

Further, the connection interface 106 for enabling data transmission and reception to and from the commodity reading apparatus 20 is connected to the CPU 101 of the POS terminal 10. The commodity reading apparatus 20 is connected to the connection interface 106. A printer 107 that performs printing on a receipt is connected to the CPU 101 of the POS terminal 10. The POS terminal 10 prints transaction content of one transaction on the receipt through the printer under the control by the CPU 101.

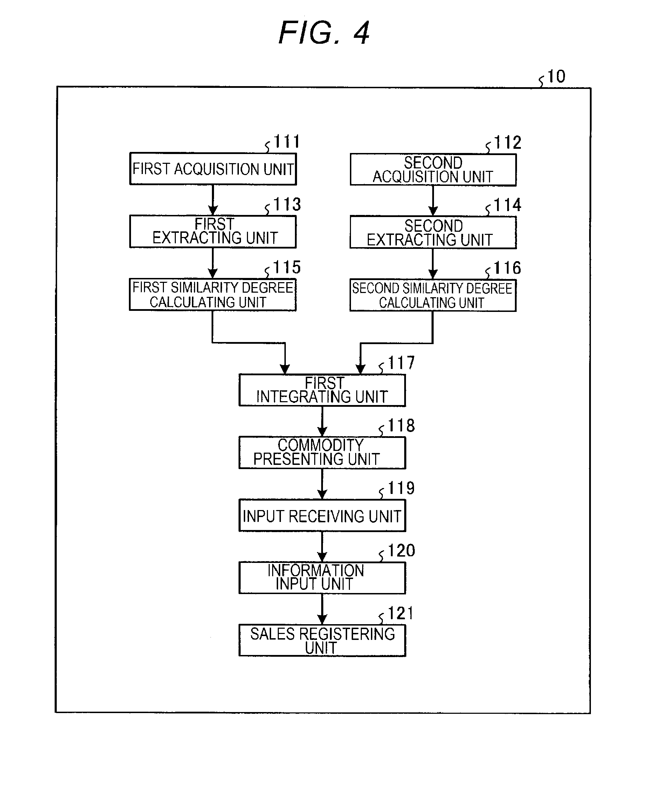

The functional configuration of the POS terminal 10 realized by the CPU 101 of the POS terminal 10 executing a computer program is described with reference to FIG. 4.

FIG. 4 is a block diagram showing the functional configuration of the POS terminal 10. The CPU 101 of the POS terminal 10 executes a computer program stored in the HDD 104 to realize functional units shown in FIG. 4. The functional units included in the POS terminal 10 are described below.

A first acquisition unit 111 outputs an image capturing ON-signal to the first image capturing unit 204 to start an image capturing operation by the first image capturing unit 204. After starting the image capturing operation, the first acquisition unit 111 sequentially acquires images (frame images) captured by the first image capturing unit 204. The acquisition of the images by the first acquisition unit 111 is performed in the order of storing the frame images in the RAM 203, that is, in the order of the image capturing.

A second acquisition unit 112 performs, concerning the second image capturing unit 205, processing the same as that of the first acquisition unit 111. Note that acquiring timings of the first acquisition unit 111 and the second acquisition unit 112 may be synchronous or may be asynchronous. In the following description, an image captured by the first image acquisition unit 204 is referred to as a "first image" and an image captured up by the second image acquisition unit 205 is referred to as a "second image".

A first extracting unit 113 extracts, from the first image acquired by the first acquisition unit 111, a feature amount of the commodity G captured by the first image capturing unit 204. Specifically, the first extracting unit 113 detects, from the first image acquired by the first acquisition unit 111, a region (contour line) representing the entire or a part of the commodity G. The first extracting unit 113 extracts, from the detected region, feature amount representing a surface state such as a hue and an unevenness state of the region as a feature amount of the commodity G, the image of which is captured by the first image capturing unit 204.

Note that a detecting method for the commodity G is not particularly limited. For example, a publicly-known pattern matching technique or a moving body detection technique may be used. As another method of commodity detection, it is determined whether a skin color region is detected from the first image, that is, reflection of a hand of the operator (store clerk) is detected. If the skin color region is detected, the detection of the contour line is performed in the vicinity of the skin color region to perform contour extraction of a commodity assumed to be gripped by the hand of the store clerk. When the contour detection is performed, if a contour indicating the shape of the hand and a contour of an object other than the hand in the vicinity of the contour of the hand are detected, the contour line of the object is detected as a region representing the commodity.

A second extracting unit 114 performs, concerning the second image acquired by the second acquisition unit 112, processing the same as that of the first extracting unit 113. In the following description, the feature amount extracted by the first extracting unit 113 is referred to as a "first feature amount" and the feature amount extracted by the second extracting unit 114 is referred to as a "second feature amount" .

The first similarity degree calculating unit 115 compares the first feature amount extracted by the first extracting unit 113 and feature amounts of commodities registered in the PLU file F1 (hereinafter, registered commodity) to calculate similarity degrees between the commodity G and the registered commodities. The first similarity degree calculating unit 115 executes the calculation of similarity degree for each registered commodity and recognizes the registered commodity, the similarity degree of which exceeds a predetermined threshold value, as a candidate of the commodity G (commodity candidate).

The similarity degree indicates how much an image of the entire or a part of the commodity G is similar to if the similarity degree of an image of the registered commodity is represented as 100% = "similarity: 1.0". The similarity degree may be calculated by changing weight for the hue and the unevenness state of the surface.

Recognizing the object included in the image in this way is called general object recognition. Concerning the general object recognition, various recognition techniques are explained in the following literature:
Keiji Yanai, "Current and Future Statuses of Generic Object Recognition" Information Processing Society of Japan Transaction, Vol. 48, No. SIG16 [retrieved on May 19, 2012], Internet <URL: http://mm.cs.uec.ac.jp/IPSJ-TCVIM-Yanai.pdf>

A technique for performing the generic object recognition by dividing an image into regions for each of objects is explained in the following literature:
Jamie Shotton et al., "Semantic Texton Forests for Image Categorization and Segmentation", [retrieved on May 19, 2012], Internet <URL: http://citeseerx.ist.psu.edu/viewdoc/download?doi=10.1.1.1 45.3036&rep=rep1&type=pdf>

Note that a calculation method of similarity degree between the captured image of the commodity G and the registered commodity is not particularly limited. For example, similarity degree between the captured image of the commodity G and each of the registered commodities may be calculated as absolute evaluation or may be calculated as relative evaluation.

If the similarity degree is calculated as the absolute evaluation, the captured image of the commodity G and the registered commodity are compared on a one-to-one basis. Similarity degree derived as a result of the comparison only has to be directly adopted. If the similarity degree is calculated as the relative evaluation, the similarity degree only has to be calculated such that a sum of the similarity degrees between the captured image of the commodity G and the registered commodities is 1.0 (100%).

The similarity degree may be a value (similarity degree) indicating how much a feature amount of the commodity G and a feature amount of the registered commodity registered in the PLU file F1 are similar to one the other when the feature amounts are compared. Note that the concept of the similarity degree is not limited to this example. The similarity degree may be a value indicating coincidence degree of the commodity G with feature amount of the registered commodity registered in the PLU file or a value indicating how much the feature amount of the commodity G and the feature amount of the registered commodity in the PLU file F1 are correlated.

The second similarity degree calculating unit 116 performs processing the same as that of the first similarity degree calculating unit 115 concerning the second feature degree extracted by the second extracting unit 114. Note that, if feature amount for the first image capturing unit 204 and the second image capturing unit 205 are separately prepared in the PLU file F1, similarity degree is calculated using the feature amount corresponding to the first image capturing unit 204 or the second image capturing unit 205.

A first integrating unit 117 integrates, on the basis of similarity degree, results (commodity candidates) respectively recognized by the first similarity degree calculating unit 115 and the second similarity degree calculating unit 116 and outputs a final recognition result. An integrating method is not particularly limited. Various methods can be adopted. For example, among the commodity candidates respectively recognized by the first similarity degree calculating unit 115 and the second similarity degree calculating unit 116, the first integrating unit 117 may output, as the final recognition result, a predetermined number of commodity candidates (e.g., four) in the descending order from the commodity candidate having the highest similarity degree to the commodity G. Note that, concerning the same commodity candidates recognized by the first similarity degree calculating unit 115 and the second similarity degree calculating unit 116, a higher similarity degree is adopted.

Concerning the similarity degrees of the commodity candidates respectively recognized (calculated) by the first similarity degree calculating unit 115 and the second similarity degree calculating unit 116, the first integrating unit 117 calculates average of the similarity degrees for each of the similarity calculating units. The first integrating unit 117 compares the calculated averages and may output a commodity candidate group having a higher value of the average as the final recognition result. Note that, if commodity candidate groups exceed a predetermined number of groups, the first integrating unit 117 selects the predetermined number of commodity candidate groups in the descending order from the commodity candidate group having the highest similarity degree and outputs the predetermined number of commodity candidate groups.

If one commodity candidate, a value of similarity degree of which is extremely high compared with other commodity candidates, is present among the commodity candidates respectively recognized by the first similarity degree calculating unit 115 and the second similarity degree calculating unit 116, the commodity candidate may be automatically decided as a determined commodity.

A commodity presenting unit 118 displays information concerning the commodity candidates (the registered commodities) output from the first integrating unit 117 on the first display device 25. More specifically, the commodity presenting unit 118 reads out, from the PLU file F1, records of the registered commodities output as the recognition result to display the records on the commodity candidate screen of the first display device 25.

FIG. 5 is a diagram showing a display example of the commodity candidate screen. As shown in FIG. 5, a commodity candidate screen A1 displayed on the first display device 25 includes a captured image region A11 and a commodity candidate region A12.

The captured image region A11 is used for displaying a captured image acquired by the first acquisition unit 111 (or the second acquisition unit 112). A manual registration button B1 for manually recognizing (registering) the commodity G from a department code, a commodity list, or the like is provided below the captured image region A1. The CPU 201 displays, in response to the operation of the manual registration button B1, a manual registration screen (not shown in the figure) on which the recognition (registration) of the commodity G is manually performed on the first display device 25. Note that a commodity designated via the manual registration screen is processed as a determined commodity.

The commodity candidate region A12 is used for displaying information concerning registered commodities recognized as commodity candidates. Display regions A2 are arranged in the commodity candidate region A12. In FIG. 5, an example is shown in which four display regions A2 are set in the commodity candidate region A12. However, the number of the display regions A2 is not particularly limited. The commodity presenting unit 118 displays commodity information (XX, XA, etc.) such as commodity images and commodity names of the commodity candidates in the display regions A2. The commodity candidates displayed in the commodity candidate region A12 can be selected via the touch panel 24. With the configuration described above, the operator of the commodity reading apparatus 20 can select the commodity candidate corresponding to the commodity G as the determined commodity out of the commodity candidates displayed in the commodity candidate region A12.

An input receiving unit 119 receives various kinds of input operation corresponding to display of the first display device 25 via the touch panel 24 or the keyboard 26. For example, the input receiving unit 119 receives, on the basis of selection operation for the commodity candidates, selection operation for the determined commodity corresponding to the commodity G out of the displayed commodity candidates.

An information input unit 120 inputs information corresponding to the operation content received by the input receiving unit 119 to the commodity reading apparatus 20 via the connection interface 208. For example, the information input unit 120 inputs, concerning the determined commodity decided with a manner as described above, information (e.g., a commodity ID, a commodity name, etc.) indicating the commodity. Note that the information input unit 120 may input, together with the commodity ID and the like, the number of sales quantities separately input via the touch panel 24 or the keyboard 26.

A sales registering unit 121 performs, on the basis of the commodity ID and the number of sales quantities input from the information input unit 120, a sales registration of the commodity corresponding to the commodity ID. Specifically, the sales registering unit 121 records, referring to the PLU file F1, a notified commodity ID, and a commodity classification, a commodity name, a unit price, and the like corresponding to the commodity ID in the sales master file together with the number of sales quantities to perform sales registration.

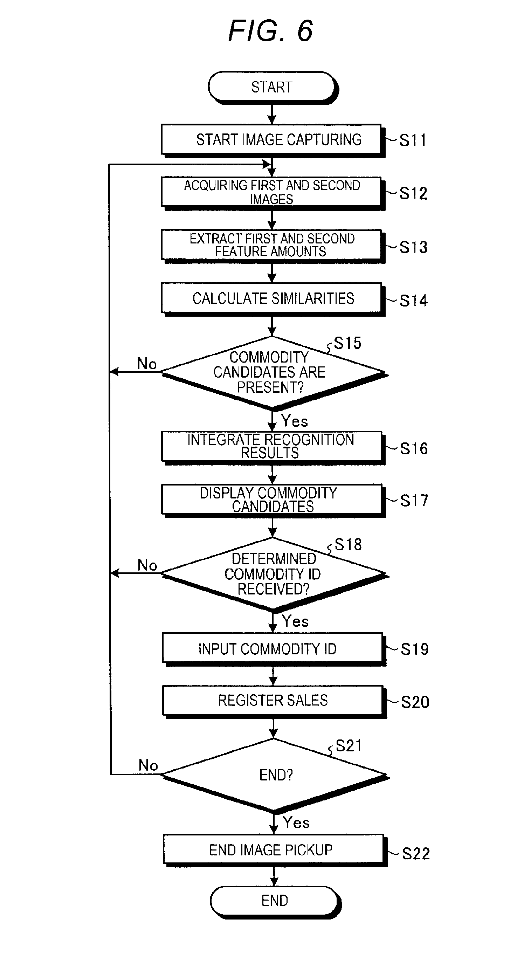

Operation in the present embodiment is described below with reference to FIG. 6. FIG. 6 is a flowchart illustrating an example of sales registration processing executed by the POS terminal 10.

If "sales registration" is selected from a menu of the job selection screen (not shown in the figure) displayed on the first display device 12, the CPU 101 of the POS terminal 10 starts the sales registration processing. First, the first acquisition unit 111 and the second acquisition unit 112 output image capturing ON-signals to the first image capturing unit 204 and the second image capturing unit 205 to start an image capturing operation by the first image capturing unit 204 and the second image capturing unit 205 (ACT S11). The first acquisition unit 111 acquires a first image captured by the first image capturing unit 204. The second acquisition unit 112 acquires a second image captured by the second image capturing unit 205 (ACT S12).

Subsequently, the first extracting unit 113 extracts a first feature amount from the first image. The second extracting unit 114 extracts a second feature amount from the second image (ACT S13).

The first similarity degree calculating unit 115 compares the first feature amount with each of the feature amounts of the registered commodities in the PLU file F1 to calculate similarity degree between the first feature amount and each of the feature amounts of the registered commodities. The second similarity degree calculating unit 116 compares the second feature amount and each of the feature amounts of the registered commodities in the PLU file F1 to calculate similarity degree between the second feature amount and each of the feature amounts of the registered commodities (ACT S14) . Subsequently, the first similarity degree calculating unit 115 and the second similarity degree calculating unit 116 determine whether or not the registered commodity (candidate commodity), value of the calculated similarity degree of which is equal to or larger than a predetermined threshold value, is present (ACT S15).

If both of the first similarity degree calculating unit 115 and the second similarity degree calculating unit 116 determine in ACT S15 that the registered commodity, the value of the calculated similarity degree of which is equal to or larger than the predetermined threshold value, is absent (No in ACT S15), the CPU 101 returns to ACT 12. If both or one of the first similarity degree calculating unit 115 and the second similarity degree calculating unit 116 determine that the registered commodity, the value of the calculated similarity degree of which is equal to or larger than the predetermined threshold value, is present (Yes in ACT S15), the registered commodity (commodity IDs) is recognized as commodity candidate.

Subsequently, the first integrating unit 117 integrates recognition results in ACT S15 (commodity candidates) (ACT S16). The commodity presenting unit 118 displays information concerning the commodity candidates integrated in ACT S16 on the first display device 25 (ACT S17). Next, the input receiving unit 119 determines whether or not selection of a determined commodity is received via the touch panel 24 or the keyboard 26 (ACT S18). If selection operation for the determined commodity is not received (No in ACT S18), the CPU 101 returns to ACT S12.

If the selection operation for the determined commodity is received in ACT S18 (Yes in ACT S18), the information input unit 120 inputs information such as a commodity ID of the commodity to the POS terminal 10 (ACT S19). Note that, if the number of sales quantities is separately input via the touch panel 24 or the keyboard 26, in ACT 19, the information input unit 120 inputs the number of sales quantities to the POS terminal 10 together with the information indicating the determined commodity. If the number of sales quantities is not input, the number of sales quantities "1" may be input as a default value.

Subsequently, the sales registering unit 121 reads out, on the basis of the commodity ID and the number of sales quantities input in ACT S19, commodity information such as a commodity category and a unit price from the PLU file F1 and registers the commodity information in the sales master file (ACT S20).

Subsequently, the CPU 101 determines presence or absence of a job end (end of the sales registration) according to an operation instruction from the keyboard 11 (ACT S21). If the job is continued (No in ACT S21), the CPU 101 returns to ACT S12 and continues the processing. If the job is ended (Yes in ACT S21), the first acquisition unit 111 and the second acquisition unit 112 output image capturing OFF-signals to end the image capturing by the first image capturing unit 204 and the second image capturing unit 205 (ACT S22). The CPU 101 ends the processing.

As described above, according to the present embodiment, feature amounts are extracted from images respectively captured by the first image capturing unit 204 and the second image capturing unit 205 and recognition of commodity candidates is performed on the basis of the feature amounts. Consequently, it can grasp external features of the commodity G multilaterally. Therefore, it is possible to increase opportunities for extracting accurate feature amounts. Further, it is possible to increase a recognition rate of the commodity G, and thus a high efficiency of sales processing can be realized.

Note that, according to the present embodiment, the configuration is described in which the two image pickup devices (the first image capturing unit 204 and the second image capturing unit 205) acting as the feature pickup modules, are used to extract feature amounts respectively from the first image and the second image. However, the number of image pickup devices in use and the number of feature amounts to be extracted are not limited to the above.

For example, two or more feature amounts may be extracted using three or more image pickup devices. In this case, the number of feature amount extracting units that extract feature amounts from images captured by the image pickup devices and the number of similarity degree calculating units that perform determination of similarity degrees are not particularly limited and may be the same as the number of image pickup devices . The feature amounts registered in the PLU file F1 may be prepared for each of characteristics of the image pickup devices.

Two or more feature amounts may be extracted using one image pickup device. For example, as one image pickup device disposed in the reading window 22, the first image capturing unit 204 capable of capturing images in the three wavelength bands of RGB and a specific wavelength band other than the three wavelength bands may be used. In this case, the first extracting unit 113 and the second extracting unit 114 may respectively extract feature amounts in the three wavelength bands and the specific wavelength band from the first image captured by the first image capturing unit 204. A separating unit that separates image components in the three wavelength bands and the specific wavelength band of the first image may be separately provided. The first extracting unit 113 and the second extracting unit 114 may extract feature amounts from the separated image components. Note that the feature amounts registered in the PLU file F1 may be prepared for each of characteristics (the three wavelength bands and the specific wavelength band) of the image pickup device.

In the present embodiment, the commodity candidates are respectively recognized from the first image and the second image and the recognition results of the commodity candidates are integrated by the first integrating unit 117. However, recognition results may be integrated in other stages. For example, recognition results may be integrated in the stage of the first image and the second image. This example is described as a modification of this embodiment below.

### (Modification)

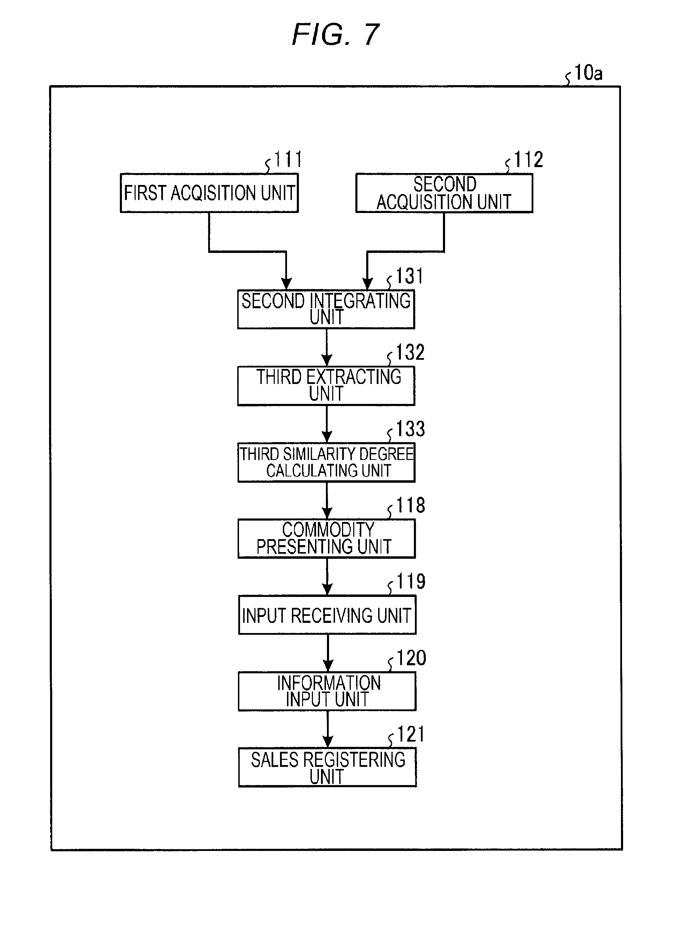

FIG. 7 is a block diagram showing the functional configuration of a POS terminal 10a according to a first modification of the first embodiment. The CPU 101 of the POS terminal 10a executes a computer program stored in the HDD 104 to thereby realize functional units shown in FIG. 7. The functional units included in the POS terminal 10a are described below. Note that functional units the same as those in the embodiment are denoted by the same reference numerals and description of the functional units is omitted.

A second integrating unit 131 integrates the first image and the second image acquired by the first acquisition unit 111 and the second acquisition unit 112 to generate an integrated image. The integrated image is, for example, an image in which the first image and the second image are longitudinally or laterally arranged. Note that, by synchronizing acquiring timings of the first acquisition unit 111 and the second acquisition unit 112, the integrated image may be generated from the first image and the second image acquired at the same time.

A third extracting unit 132 extracts a feature amount (a third feature amount) from the integrated image generated by the second integrating unit 131. Specifically, the third extracting unit 132 executes, on each of the first image and the second image included in the integrated image, processing the same as that of the first extracting unit 113 (the second extracting unit 114) described above. Note that the extraction of the third feature amount may be performed from both of the first image and the second image for each integrated image (frame) or may be performed alternately (i.e., the first image after the second image).

A third similarity degree calculating unit 133 compares the third feature amount extracted by the third extracting unit 132 and each of the feature amounts of the registered commodities in the PLU file F1 to calculate similarity degree between the commodity G and each of the registered commodities. The third similarity degree calculating unit 133 executes the calculation of similarity degrees on the registered commodities and recognizes the registered commodities, the similarity degree of which exceeds a predetermined threshold value, as commodity candidates. Note that, if the registered commodities, the similarity degree of which exceeds the predetermined threshold value, are equal to or more than a predetermined number of commodities, the predetermined number of registered commodities are selected in the descending order from the registered commodity having the highest similarity degree. If feature amounts for the first image capturing unit 204 and the second image capturing unit 205 are separately prepared, the third similarity degree calculating unit 133 calculates similarity degrees, using the feature amounts corresponding to the first image capturing unit 204 and the second image capturing unit 205.

The commodity presenting unit 118 displays information concerning the commodity candidates (the registered commodities) recognized by the third similarity degree calculating unit 133 on the first display device 25.

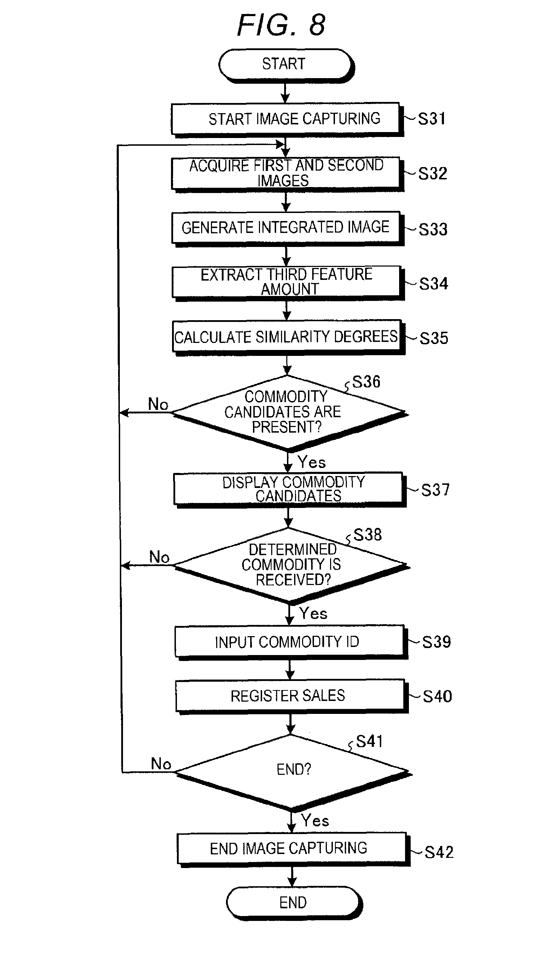

FIG. 8 is a flowchart illustrating an example of sales registration processing executed by the POS terminal 10a. Note that processing in ACTS S31, S32, and S37 to S42 is the same as the processing in ACTS S11, S12, and S17 to S22 described above. Therefore, description of the processing is not repeated.

In ACT S33, the second integrating unit 131 integrates the first image and the second image captured in ACT S32 to generate an integrated image (ACT S33). Subsequently, the third extracting unit 132 extracts a third feature amount from the integrated image generated in ACT S33 (ACT S34).

Subsequently, the third similarity degree calculating unit 133 compares the third feature amount extracted in ACT S34 and each of the feature amounts of the registered commodities in the PLU file F1 to calculate the similarity degree between the third feature amount and each of the feature amounts of the registered commodities (ACT 35). Next, the third similarity degree calculating unit 133 determines whether or not the registered commodity (commodity candidates), amount of the calculated similarity degree of which is equal to or larger than a predetermined threshold value, is present (ACT S36).

If the third similarity degree calculating unit 133 determines in ACT S36 that the registered commodity, the amount of the calculated similarity degree of which is equal to or larger than the predetermined threshold value, is absent (No in ACT S36), the CPU 101 returns to ACT S32. If the third similarity degree calculating unit 133 determines that the registered commodity, the amount of the calculated similarity degree of which is equal to or larger than the predetermined threshold value, is present (Yes in ACT S36), the third similarity degree calculating unit 133 recognizes the registered commodity (commodity ID) as a commodity candidate. The commodity presenting unit 118 displays information concerning the commodity candidate recognized in ACT S36 on the first display device 25 (ACT S37).

In this way, according to the present modification, as in the embodiment described above, it is possible to grasp external features of the commodity G multilaterally. Therefore, it is possible to increase opportunities for extracting accurate feature amounts. Further, it is possible to increase a recognition rate of the commodity G, and thus a high efficiency of sales processing can be achieved.

### (Second Embodiment)

A second embodiment is described. In this embodiment, a configuration including another feature amount acquiring unit instead of the second image capturing unit 205 is described. Note that components the same as that in the embodiment described above are denoted by the same reference numerals and thus description of the components is omitted.

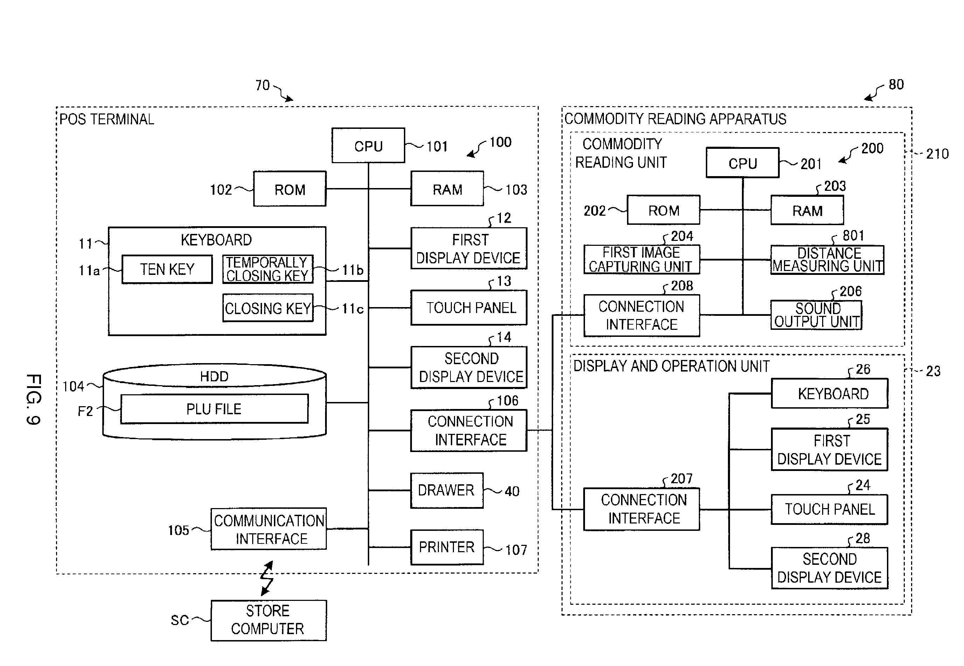

FIG. 9 is a block diagram showing the hardware configurations of a POS terminal 70 and a commodity reading apparatus 80 according to the second embodiment. The commodity reading apparatus 80 is different from the commodity reading apparatus 20 in that the commodity reading apparatus 80 includes a distance measuring unit 801 instead of the second image capturing unit 205 of the commodity reading apparatus 20.

The distance measuring unit 801 functions as a feature amount acquiring unit. The distance measuring unit 801 includes a distance image sensor employing a TOF (Time Of Flight) system or a distance sensor such as a scanning range sensor. The distance measuring unit 801 is disposed in the reading window 22 shown in FIG. 1. A measurement range in which the distance measuring unit 801 performs measurement is set to be substantially equal to the image capturing range of the first image capturing unit 204. The distance measuring unit 801 operates under the control by the CPU 201 to measure a three-dimensional distance from the distance measuring unit 801 (the reading window 22) to an object present in the image capturing range of the first image capturing unit 204. A measurement result of the distance measuring unit 801 is information indicating an exterior (depth of unevenness or the like) of the commodity G viewed from the inside of the reading window 22.

The POS terminal 70 includes a PLU file F2 in the HDD 104. The PLU file F2 has a data structure (see FIG. 3) the same as that of the PLU file F1. However, feature amounts stored in the PLU file F2 are different from that stored in the PLU file F1. The PLU file F2 stores feature amounts respectively corresponding to characteristics of the first image capturing unit 204 and the distance measuring unit 801. Specifically, the PLU file F2 stores, concerning registered commodities, a feature amount extracted from an image captured by the first image capturing unit 204 as a feature amount for the first image capturing unit 204. The PLU file F2 stores, concerning the registered commodities, a feature amount extracted from distance information measured by the distance measuring unit 801 as a feature amount for the distance measuring unit 801. The feature amount extracted from the distance information represents features, such as an external shape and unevenness, of a registered commodity.

Note that, in this embodiment, the feature amounts for the first image capturing unit 204 and the distance measuring unit 801 are provided for each of the registered commodities. However, one co-occurrence feature amount obtained by integrating these feature amounts may be provided. In the co-occurrence feature amount, the feature amounts of the first image capturing unit 204 and the distance measuring unit 801 are associated with one another on the basis of a co-occurrence relation. For example, if the location of a region where chroma and brightness are high in the feature amount for the first image capturing unit 204 tends to be closest to the reading window 22 in the feature amount for the distance measuring unit 801, these elements are associated with each other.

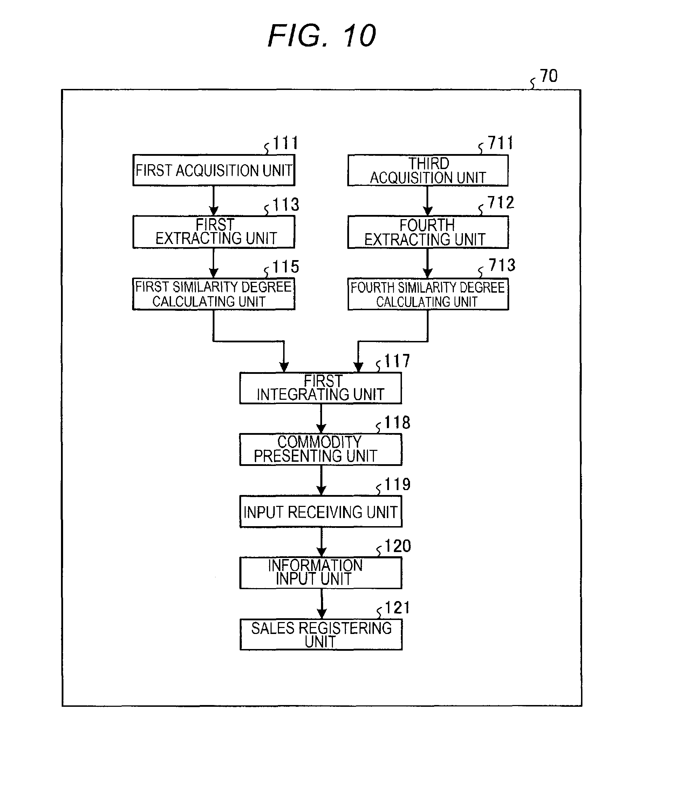

The functional configuration of the POS terminal 70 realized by the CPU 101 of the POS terminal 70 executing a computer program is described with reference to FIG. 10.

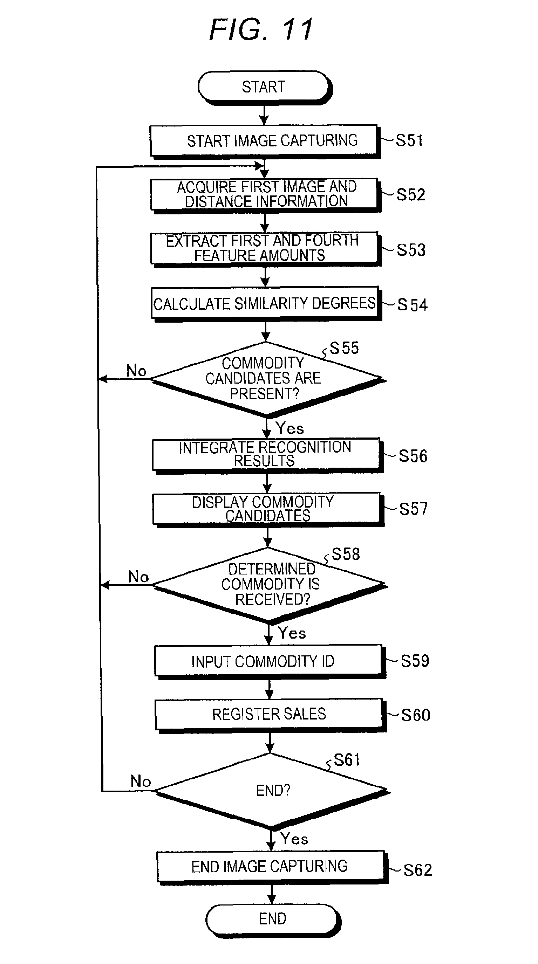

FIG. 10 is a block diagram showing the functional configuration of the POS terminal 70. The CPU 101 of the POS terminal 70 executes a computer program stored in the HDD 104 to thereby realize functional units shown in FIG. 11. Note that functional units the same as the functional units of the POS terminal 10 described above are denoted by the same reference numerals.

A third acquiring unit 711 sequentially acquires measurement results of the distance measuring unit 801 as distance information. Note that the third acquiring unit 711 desirably performs the acquisition of the distance information in synchronization with the acquiring timing of the first acquiring unit 111.

A fourth extracting unit 712 extracts, from the distance information acquired by the third acquiring unit 711, a feature amount (hereinafter, fourth feature amount) of the commodity G photographed by the first image capturing unit 204. For example, the fourth extracting unit 712 detects, from the distance information acquired by the third acquiring unit 711, a region of a predetermined range close to the reading window 22. The fourth extracting unit 712 extracts, on the basis of a separation distance from the reading window 22, a fourth feature amount representing a state of the surface of the detected region such as an unevenness state as a feature amount of the commodity G photographed by the first image capturing unit 204. Note that a region set as a target of the extraction by the fourth extracting unit 712 may be a region detected by the first extracting unit 113.

A fourth similarity degree calculating unit 713 compares the fourth feature amount extracted by the fourth extracting unit 712 with each of the feature amounts of the registered commodities in the PLU file F1 to calculate similarity degrees between the commodity G and the registered commodities. The fourth similarity degree calculating unit 713 executes the calculation of similarity degrees on the registered commodities to recognize the registered commodities, the similarity degrees of which exceed a predetermined threshold value, as commodity candidates of the commodity G. Note that the first similarity degree calculating unit 115 performs comparison with the feature amounts of the registered commodities prepared for the first image capturing unit 204 and the fourth similarity degree calculating unit 713 performs comparison with the feature amounts of the registered commodities prepared for the distance measuring unit 801.

The first integrating unit 117 integrates, on the basis of the similarity degrees, the results (the commodity candidates) respectively recognized by the first similarity degree calculating unit 115 and the fourth similarity calculating unit 713 and outputs a final recognition result.

Operation of the present embodiment is described with reference to FIG. 11. FIG. 11 is a flowchart illustrating an example of the sales registration processing executed by the POS terminal 70. Note that processing in ACTS S51 and S56 to S62 are the same as the processing in ACTS S11 and S16 to S22 described above. Therefore, description of the processing is not repeated.

If the first acquisition unit 111 stats an image capturing operation through the first image capturing unit 204, the first acquisition unit 111 s acquires a first image captured by the first image capturing unit 204. The third acquisition unit 711 acquires a measurement result of the distance measuring unit 801 as distance information (ACT S52).

Subsequently, the first extracting unit 113 extracts a first feature amount from the first image. The fourth extracting unit 712 extracts a fourth feature amount from the distance information (ACT S53).

The first similarity degree calculating unit 115 compares the first feature amount with each of the feature amounts of the registered commodities in the PLU file F1 to calculate similarity degree between the first feature amount and each of the feature amounts of the registered commodities. The fourth similarity degree calculating unit 713 compares the fourth feature amount with each of the feature amounts of the registered commodities in the PLU file F1 to calculate similarity degree between the fourth feature amount with each of the feature amounts of the registered commodities (ACT 54) . Subsequently, the first similarity degree calculating unit 115 and the fourth similarity degree calculating unit 713 determine whether or not the registered commodities (commodity candidates), amounts of the calculated similarity degree of which are equal to or larger than a predetermined threshold value, are present (ACT 55).

If both of the first similarity degree calculating unit 115 and the fourth similarity degree calculating unit 713 determine in ACT S55 that the registered commodities, the amounts of the calculated similarity degree of which are equal to or larger than the predetermined threshold value, are absent (No in ACT S55), the CPU 101 returns to ACT S52. If both or one of the first similarity degree calculating unit 115 and the fourth similarity degree calculating unit 713 determines that the registered commodities, the amounts of the calculated similarity degree of which are equal to or larger than the predetermined threshold value, are present (Yes in ACT S55), the registered commodities (commodity IDs) are recognized as commodity candidates.

If the first integrating unit 117 integrates recognition results in ACT S55 (the commodity candidates) (ACT S56), the commodity presenting unit 118 displays information concerning the integrated commodity candidates on the first display device 25 (ACT S57).

As described above, according to this embodiment, feature amounts are respectively extracted from the image captured by the first image capturing unit 204 and the distance information acquired by the distance measuring unit 801 and recognition of commodity candidates is performed from the feature amounts. Consequently, it is possible to grasp external features of the commodity G multilaterally. Therefore, opportunities for extracting accurate feature amounts can be increased. Further, since it is possible to increase a recognition rate of the commodity G, a high efficiency of sales processing can be realized.

Note that, in this embodiment, the recognition results in the first similarity degree calculating unit 115 and the fourth similarity degree calculating unit 713 are integrated by the first integrating unit 117. However, recognition results may be integrated at other stages. For example, if the distance measuring unit 801 is a distance image sensor, a measurement result (distance information) is output as image data (a distance image). In such a case, as in the modification of the first embodiment, recognition results may be integrated at the stage of the first image and the distance image. If this form is adopted, the configuration shown in FIG. 7 can be applied to the configuration of the functional units of the POS terminal 70 by changing the processing targets to the first image and the distance image.

In this embodiment, the first image capturing unit 204 and the distance measuring unit 801 are provided. However, if the first image capturing unit 204 also functions as a distance image sensor, only the first image capturing unit 204 may be provided. In this case, the first extracting unit 113 and the second extracting unit 114 may be configured to respectively extract the first feature amount and the second feature amount from the first image captured by the first image capturing unit 204. A separating unit that separates a component of a distance image from the first image may be separately provided. The first extracting unit 113 and the second extracting unit 114 may be configured to extract the first feature amount and the second feature amount from the separated image component.

If the PLU file F2 stores a co-occurrence feature amount, a co-occurrence relation of the first image and the distance information (or the distance image) may be extracted as a feature amount from the first image and the distance information (the distance image). This form is described as a modification of this embodiment.

### (Modification)

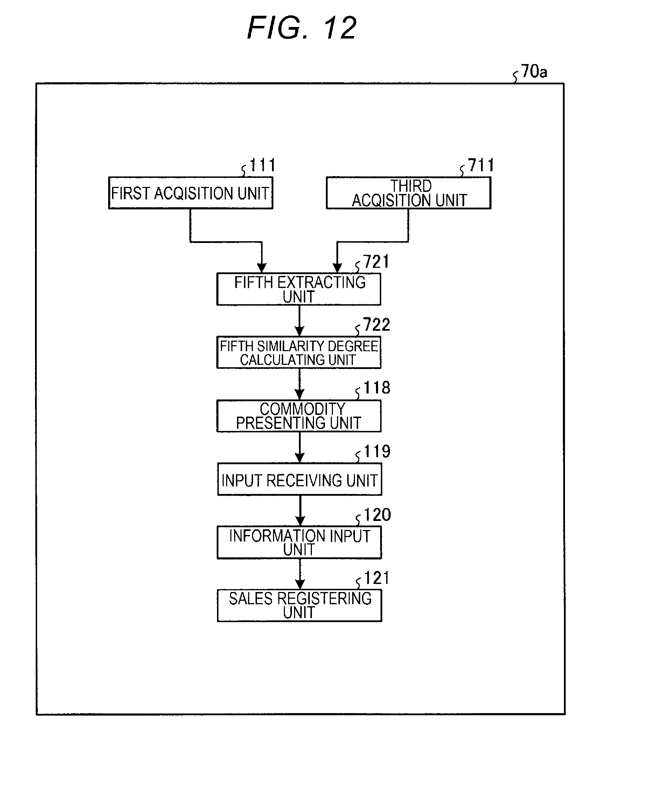

FIG. 12 is a block diagram showing the functional configuration of a POS terminal 70a according to a modification of the second embodiment. The CPU 101 of the POS terminal 70a executes a computer program stored in the HDD 104 to thereby realize functional units shown in FIG. 12. The functional units included in the POS terminal 70a are described below. Note that the first acquisition unit 111, the third acquisition unit 711, the commodity presenting unit 118, the input receiving unit 119, the information input unit 120, the sales registering unit 121 are the same as those in the embodiment. Therefore, description of the units is omitted.

A fifth extracting unit 721 extracts, on the basis of a first image and distance information (or a distance image) acquired by the first acquisition unit 111 and the third acquisition unit 711, as a feature amount (a fifth feature amount), a relation between elements included in the both information. The "elements" are specified according to the co-occurrence feature amount. For example, it is assumed that a co-occurrence relation between chroma (brightness) and a separation distance is set as the co-occurrence feature amount. In this case, for example, the chroma (the brightness) of a specific region in the first image and a separation distance in the region included in the distance information are the corresponding elements. Note that the region set as the element is desirably a region where the commodity G is detected. A unit of the extraction of the fifth feature amount is not particularly limited and may be a pixel unit or may be small region units into which the separation distance as a reference is divided.

A fifth similarity degree calculating unit 722 compares the fifth feature amount extracted by the fifth extracting unit 721 and each of the co-occurrence feature amounts of the registered commodities in the PLU file F2 to calculate similarity degree between the commodity G and each of the registered commodities. The fifth similarity degree calculating unit 722 executes the calculation of similarity degrees on the registered commodities and recognizes the registered commodities, the similarity degree of which exceeds a predetermined threshold value, as commodity candidates of the commodity G. Note that, if the registered commodities, the similarity degree of which exceeds the predetermined threshold value, are equal to or more than a predetermined number of commodities, the fifth similarity degree calculating unit 722 selects the predetermined number of the registered commodities in the descending order from the registered commodity having the highest similarity degree.

The commodity presenting unit 118 displays information concerning the commodity candidates (the registered commodities) recognized by the fifth similarity degree calculating unit 722 on the first display device 25.

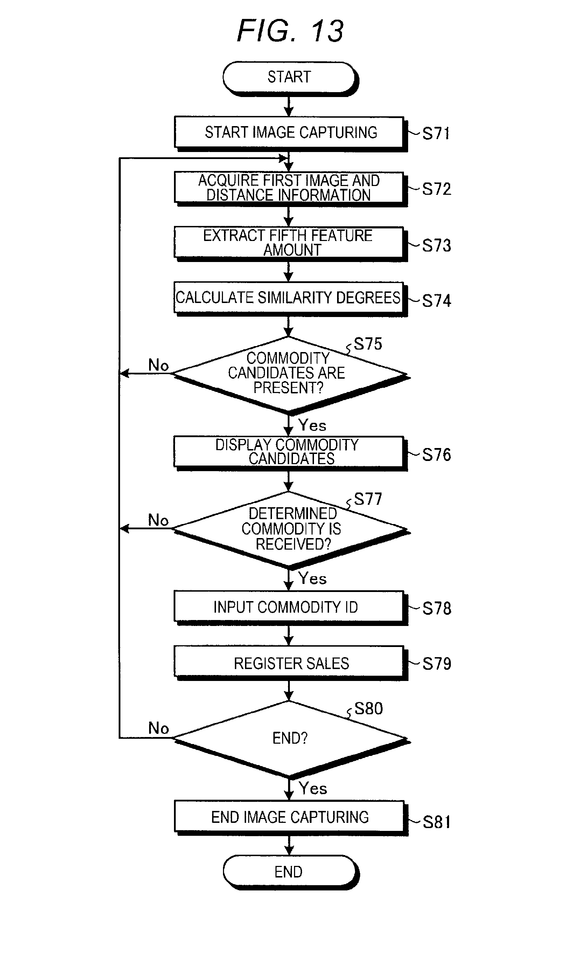

FIG. 13 is a flowchart illustrating an example of sales registration processing executed by the POS terminal 70a. Note that processing in ACTS S71, S72, and S76 to S81 is the same as that in ACTS S51, S52, and S57 to S62 described above. Therefore, description of the processing is omitted.

In ACT S73, the fifth extracting unit 721 extracts a fifth feature amount from the first image and the distance information acquired in ACT S72 (ACT S73).

The fifth similarity degree calculating unit 722 compares the fifth feature amount extracted in ACT S73 with each of the co-occurrence feature amounts of the registered commodities in the PLU file F1 and calculates similarity degree between the fifth feature amount and each of the co-occurrence feature amounts of the registered commodities (ACT S74). Subsequently, the fifth similarity degree calculating unit 722 determines whether or not the registered commodity (the commodity candidate), an amount of the calculated similarity degree of which is equal to or larger than a predetermined threshold value, is present (ACT S75).

If the fifth similarity degree calculating unit 722 determines in ACT S75 that the registered commodities, the amount of the calculated similarity degree of which is equal to or larger than the predetermined threshold value, are absent (No in ACT S75), the CPU 101 returns to ACT S72. If the fifth similarity degree calculating unit 722 determines that the registered commodities, the amount of the calculated similarity degree of which is equal to or larger than the predetermined threshold value, are present (Yes in ACT S75), the fifth similarity degree calculating unit 722 recognizes the registered commodities (commodity IDs) as commodity candidates.

The commodity display unit 118 displays, on the first display device 25, information concerning the commodity candidates recognized in ACT S75 (ACT S76).

As described above, according to the present modification, it is possible to grasp external features of the commodity G multilaterally. Therefore, opportunities for extracting accurate feature amounts can be increased. Further, since it is possible to increase a recognition rate of the commodity G, a high efficiency of sales processing can be achieved.

The embodiments of the present invention are described above. However, the embodiments are presented as examples and are not intended to limit the scope of the invention. The embodiments can be implemented in other various forms. Various omissions, substitutions, changes, additions, combinations, and the like can be performed without departing from the spirit of the invention. The embodiments and the modifications of the embodiments are included in the scope and the gist of the invention and included in the invention described in claims and the scope of equivalents of the invention.

For example, in the embodiments, the POS terminal 10 includes the PLU file F1 (or the PLU file F2). However, the present invention is not limited to this. For example, the commodity reading apparatus 20 may include the PLU file F1 (or the PLU file F2). An external apparatus accessible by the POS terminal 10 and the commodity reading apparatus 20 may include the PLU file F1 (or the PLU file F2).

In the embodiments, the example is described in which the POS terminal 10 (or the POS terminal 70) is the information processing apparatus. However, the present invention is not limited to this. For example, the commodity reading apparatus 20 may include any one or all of the functional units included in the POS terminal 10 to output feature amounts, similarity degrees , a determined commodity, and the like to the POS terminal 10.

In the embodiments, as the checkout system 1, the apparatus of the system configuration configured by the POS terminal 10 and the commodity reading apparatus 20 is described. However, the present invention is not limited to this. For example, the present invention may be applied to a single apparatus having an integrated configuration including the functions of the POS terminal 10 and the commodity reading apparatus 20. Example of the single apparatus having the integrated configuration including the functions of the POS terminal 10 and the commodity reading apparatus 20 is a self-checkout POS apparatus (hereinafter simply referred to as a self-POS) installed in a store such as a supermarket.

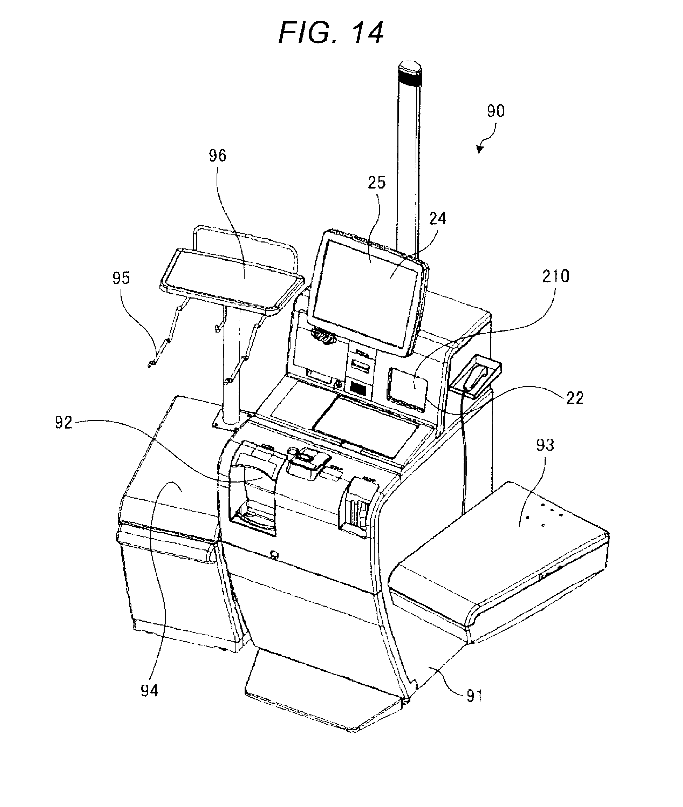

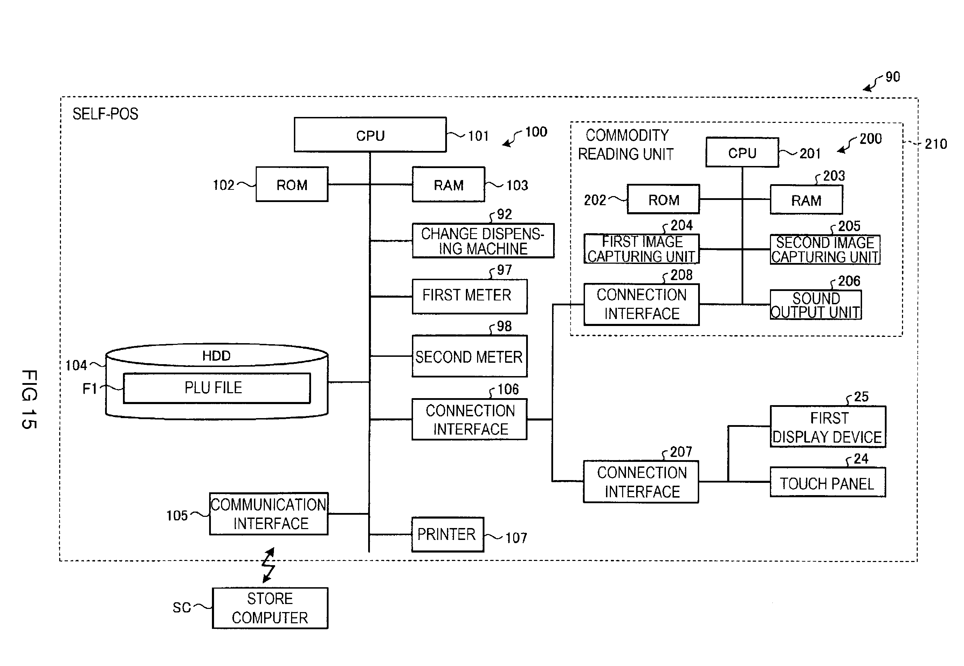

FIG. 14 is an external perspective view showing the configuration of a self-POS 90. FIG. 15 is a block diagram showing the hardware configuration of the self-POS 90. Note that, in the following description, components the same as those shown in FIGS. 1 and 2 are denoted by the same reference numerals and thus redundant description of the components is omitted. As shown in FIGS. 14 and 15, a change dispensing machine 92 for receiving deposit of bills for settlement and change bills is provided in a main body 91 of the self-POS 90. The main body 91 includes the first display device 25, on the surface of which the touch panel 24 is laminated, and the commodity reading unit 210 that reads commodity image in order to recognize (detect)a classification or a category and the like of a commodity.

As the first display device 25, for example, a liquid crystal display is used. The first display device 25 displays a guidance screen for informing a customer of an operation method of the self-POS 90 and various input screens. The first display device 25 further displays a registration screen for displaying commodity information read by the commodity reading unit 210. The first display device 25 still further displays a total amount of payable of commodities, a deposit amount, a change amount, and the like and displays a settlement screen for selecting a payment method.

When the customer holds a commodity over the reading window 22 of the commodity reading unit 210, the commodity reading unit 210 reads (captures) images of the commodity with the first image capturing unit 204 and the second image capturing unit 205.

A first placing table 93 for placing unsettled commodities in a basket is provided at the right-side of the main body 91. A second placing table 94 for placing settled commodities is provided at the left-side of the main body 91. On the second placing table 94, a hook 95 for hanging a bag for storing the settled commodities and a temporary placing table 96 for temporarily placing the settled commodities before being put in the bag are provided. A first meter 97 and a second meter 98 are respectively provided in the first placing table 93 and the second placing table 94. The first placing table 93 and the second placing table 94 have a function for confirming that the weight of a commodity is the same before and after settlement.

If the self-POS 90 having such a configuration is applied to a store system, the self-POS 90 functions as an information processing apparatus.

The computer programs executed in the apparatuses in the embodiments are provided while being incorporated in advance in storage media (ROMs or storing units) provided in the apparatuses. However, not only this, but the programs may be provided while being recorded in a computer-readable recording medium such as a CD-ROM, a flexible disk (FD), a CD-R, or a DVD (Digital Versatile Disk) as a file of in an installable format or an executable format. Further, the storage medium is not limited to a medium independent from a computer or an embedded system and also includes a storage medium in which the computer programs transmitted through a LAN, the Internet, or the like are downloaded and stored or temporarily stored.

The computer programs executed in the apparatuses in the embodiments may be stored on a computer connected to a network such as the Internet and provided by being downloaded through the network or may be provided or distributed through the network such as the Internet.

## Claims

1. An information processing apparatus comprising:
an acquisition module configured to acquire, from a feature pickup module including at least one image capturing module, information indicating an exterior of an article picked up by the feature pickup module;
an extracting module configured to extract, from the information acquired by the acquisition module, a plurality of feature amounts indicating external features of the article;
a recognizing module configured to compare each of the feature amounts extracted by the extracting module with feature amounts for collation of commodities registered in a dictionary in advance to recognize commodity candidates serving as candidates of the article out of the commodities according to similarity degrees of the feature amounts; and
a display module configured to display information concerning the commodity candidates recognized by the recognizing module.

2. The apparatus according to claim 1, wherein
the feature pickup module includes a plurality of the image capturing modules having characteristics different from one another, and
the acquisition module acquires a captured image of the article from each of the image capturing modules.

3. The apparatus according to claim 1 or 2, wherein
the feature pickup module includes the image capturing module and a distance measuring module configured to measure a three-dimensional distance to the article present in an image capturing region of the image capturing module, and
the acquisition module acquires a captured image of the article from the image capturing module and acquires the three-dimensional distance measured by the distance measuring module.

4. The apparatus according to any one of claims 1 to 3, further comprising an integrating module configured to integrate, on the basis of the similarity degrees, the commodity candidates for the feature amounts recognized by the recognizing module, wherein
the display module displays information concerning the commodity candidates integrated by the integrating module.

5. The apparatus according to any one of claims 1 to 4, wherein
the dictionary stores, concerning each of the commodities, as a co-occurrence feature amount, a co-occurrence relation between feature amounts relating to a predetermined elements, and
the recognizing module compares a relation between the feature amounts extracted by the extracting module concerning the elements and the feature amounts for collation of the commodities registered in the dictionary and calculates similarity degrees between the relation and the feature amounts for collation.

6. An information processing method including:
capturing an image of an article;
acquiring picked up information indicating an exterior of the article ;
extracting, from the information acquired at the acquiring step, a plurality of feature amounts indicating external features of the article;
comparing each of the feature amounts extracted by the extracting module with feature amounts for collation of commodities registered in a dictionary in advance;
recognizing commodity candidates serving as candidates of the article out of the commodities according to similarity degrees of the feature amounts; and
displaying information concerning the commodity candidates recognized at the recognizing step.

7. The method according to claim 6,
the capturing step comprising capturing a plurality of the image having characteristics different from one another, and
the acquiring step comprising acquiring a captured image of the article from each of the captured images.

8. The method according to claim 6 or 7, wherein capturing step further comprising measuring a three-dimensional distance to the article present in an image capturing region, and
the acquiring step further comprising acquiring a captured image of the article at the capturing step and acquiring the three-dimensional distance measured by the distance at the measuring step.

9. The method according to any one of claims 6 to 8, further comprising
integrating, on the basis of the similarity degrees, the commodity candidates for the feature amounts recognized at the recognizing step, and
displaying information concerning the commodity candidates integrated at the integrating step.

10. The method according to any one of claims 6 to 9, wherein
the dictionary stores, concerning each of the commodities, as a co-occurrence feature amount, a co-occurrence relation between feature amounts relating to a predetermined elements, and
the recognizing step comprising comparing a relation between the feature amounts extracted by the extracting step concerning the elements and the feature amounts for collation of the commodities registered in the dictionary and calculates similarity degrees between the relation and the feature amounts for collation.

11. A computer program for causing a computer to function as an information processing apparatus according to any one of claims 1 to 5.
